# EUROPÄISCHE PATENTSCHRIFT

(11) **EP 0 393 046 B1**
(45) Veröffentlichungstag und Bekanntmachung des Hinweises auf die Patenterteilung: **26.05.1993**
(21) Anmeldenummer: 88908163.4
(22) Anmeldetag: 07.10.1988
(51) Int. Cl.: F24D 19/10

(54) **Gerät mit elektrischem Anschlusskasten für eine Heizungsanlage wie Pumpe oder Ventil**
Device in particular pump or valve with a box for electrical connections for heating installations
Dispositif notamment pompe ou valve avec boîte de connexion electrique pour des installations de chauffage

(43) Veröffentlichungstag der Anmeldung: 24.10.1990
(73) Patentinhaber: GRÄSSLIN KG, D-78104 St. Georgen/Schwarzwald (DE)
(72) Erfinder: WINKLER, Wolfgang, D-7742 St. Georgen (DE); KAMMERER, Gerd, D-7298 Lossburg (DE)
(74) Vertreter: Thoma, Friedrich, Dipl.-Ing.(FH)
(86) Internationale Anmeldenummer: DE8800621
(87) Internationale Veröffentlichungsnummer: WO9004136

(56) Entgegenhaltungen:
- EP-A- 0 141 877
- DE-A- 3 100 838

## Beschreibung

Die Erfindung betrifft ein Gerät mit elektrischem Anschlußkasten für eine Heizungsanlage, wie Pumpe oder Ventil, mit einem Gehäuse für elektrische und/oder elektronische Steuerungen, das mit dem elektrischen Anschlußkasten durch eine Befestigungseinrichtung verbunden ist.

Bei derartigen Befestigungseinrichtungen ist es erforderlich, daß diese mittelbar ein Gehäuse mit darin angeordneten elektrischen und/oder elektronischen Steuerungen, insbesondere mit einer Schaltuhr, äußerlich an einer Umwälzpumpe oder einem Ventil, insbesondere einem Mischventil, oder dergl. Geräte der verschiedensten Bauart, Abmessung oder Formgebung, befestigen. Dabei soll sichergestellt sein, daß auch eine zweckmäßige elektrische Verbindung, insbesondere mit einem Steuer- und Versorgungskabel, zwischen dem Gehäuse und einem elektrischen Anschlußkasten einer Pumpe oder dergl. Geräte geschaffen wird.

Aus der DE-A-3 100 838 ist eine Vorrichtung zur Temperaturabsenkung einer Raumheizung bekannt, bei der mittels einer laschen- oder bügelartigen Befestigungsvorrichtung ein Zeitregler an einem Heizkörperventil befestigt ist. Diese Befestigungsvorrichtung ist mechanisch starr ausgebildet und angeordnet, und ermöglicht in montiertem Zustand kein wartungserforderliches Verschwenken des Zeitreglers zum Ventil.

Der Erfindung liegt die Aufgabe zugrunde, eine Befestigungseinrichtung zu schaffen, die die Nachteile der bekannten Befestigungseinrichtung beseitigt, und die eine zugängliche bedienung und/oder Wartung der, auf einer Pumpe oder dergl. Geräte angeordneten Gehäuse ermöglicht.

Diese Aufgabe wird mit den Merkmalen im kennzeichnenden Teil des Patentanspruchs 1 und in den Unteransprüchen sind weitere vorteilhafte Einzelheiten beansprucht.

Vorteilhaft bei dieser Befestigungseinrichtung des Gerätes ist nicht nur die distanzierte und doch eng benachbarte Anordnung eines Gehäuses mit dort eingebauten elektrischen und/oder elektronischen Steuerungen, zu einer Pumpe, einem Ventil oder dergl. Geräte, ohne daß an einem derartigen Gerät, gleich welcher Bauart, Abmessung oder Formgebung, eine technische Veränderung im Bereich seines Gehäuses vorgenommen werden muß, sondern auch durch die einfache und zweckmäßige Verschwenkbarkeit des Gehäuses gegenüber dem einem derartigen Gerät, mittels des in der Befestigungseinrichtung vorgesehenen Gelenks, wodurch die Bedienung und Wartung der Geräte durch das, insbesondere im Bereich der Stirnseite angeordneten, Gehäuse nicht beeinträchtigt wird.

Vorteilhaft ist außerdem die Wirtschaftlichkeit, die mit der Befestigungseinrichtung für Gehäuse der eingangsgenannten Steuerungen erzielt wird, zumal diese Steuerungen jederzeit und an jedem Gerätetyp nachgerüstet werden können, indem dort nur der elektrische Anschlußkasten des Gerätes gewechselt wird, der zusammen mit dem Gehäuse und der neuen verschwenkbaren Befestigungseinrichtung eine Baueinheit bildet.

Von Vorteil ist ferner die vorgesehene, erforderliche elektrische Verbindung zwischen dem Gehäuse mit den Steuerungen und einem Anschlußkasten des zu steuernden Gerätes, die insbesondere aus einem Steuer- und einem Versorgungskabel bestehen kann, das zweckmäßigerweise zwischen zwei parallel zueinander verlaufenden Laschen verläuft, und das auf der Seite des Anschlußkastens mit einer elektrischen Steckverbindung angeschlossen wird.

Einige Ausführungsbeispiele der Erfindung sind in den Zeichnungen dargestellt und werden im folgenden zusammen mit weiteren vorteilhaften Einzelheiten näher erläutert. Es zeigen
- Fig. 1: eine Ansicht einer Pumpe zur Heizmittelumwälzung in Heizanlagen,
- Fig. 2: eine Ansicht einer Pumpe nach Fig. 1 mit einer stirnseitig angeordneten elektronischen Steuerung in einem Gehäuse, das über zwei Laschen mit dem Anschlußkasten der Pumpe verbunden ist,
- Fig. 3: eine Ansicht einer Pumpe nach Fig. 1 mit einer stirnseitig angeordneten Schaltuhr in einem Gehäuse, das, nach Fig. 2, über zwei Laschen verschwenkbar mit dem Anschlußkasten der Pumpe verbunden ist,
- Fig. 4: eine Ansicht auf die Anordnung nach Fig. 3 mit von der Stirnseite der Pumpe weggeschwenkter Steuerung und
- Fig. 5: eine Teilschnittansicht durch eine Anordnung nach Fig. 3 und 4.

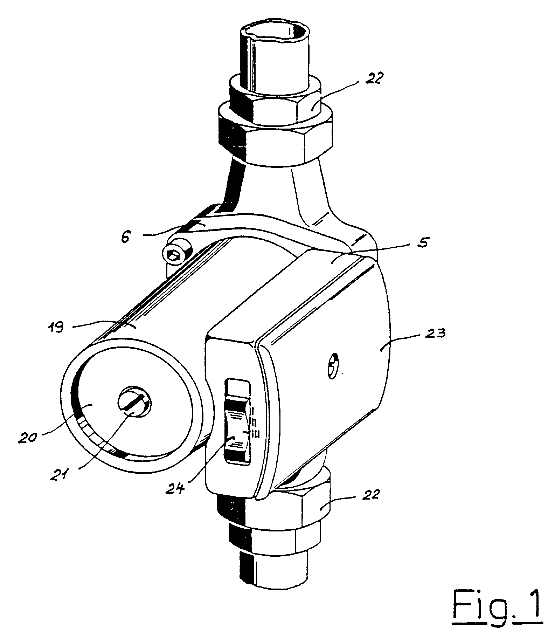

Die, in der Fig. 1 dargestellte, Umwälz-Pumpe 6 besteht im wesentlichen aus dem Pumpengehäuse 19 mit seiner Stirnseite 20, der Wartungsschraube 21, den Rohrverschraubungen 22 und dem Anschlußkasten 5 mit einem Kastendeckel 23. 24 bezeichnet ein im Anschlußkasten 5 eingebauter Stufenschalter zur Änderung der Drehzahl der Pumpe 6.

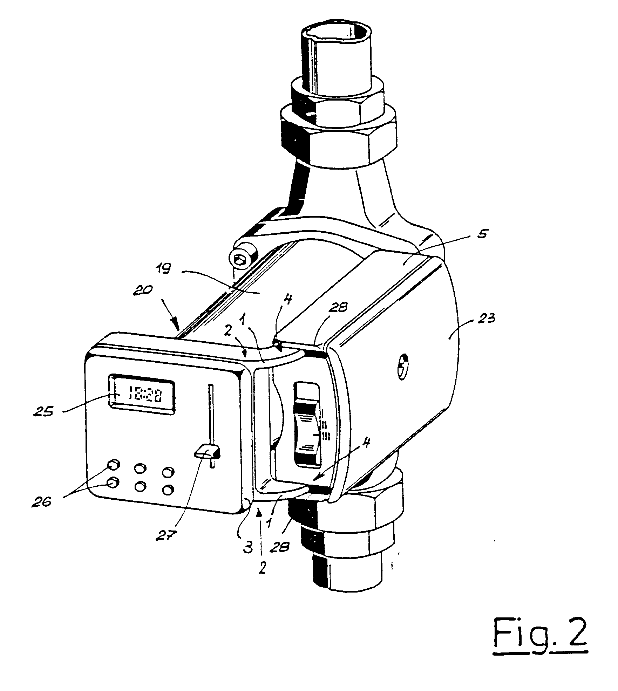

Wie nun die Fig. 2 zeigt, ist im Bereich der Stirnseite 20 des Pumpengehäuses 19 ein Gehäuse 3 mit einer insbesondere zeitgesteuerten Heizungssteuerung mit einem Display 25 zur Zeiteingabe und/oder Zeitanzeige, insbesondere zur Tageszeitanzeige, mit einer Eingabetastatur 26 und mit einem Temperatureinstellregler 27.

Das Gehäuse 3 ist einseitig mit zwei, zueinander parallel verlaufenden Laschen 1 versehen, die stoffschlüssig am Gehäuse 3 angeordnet sind und die mit den Enden 4 in Schlitze 28 im Anschlußkasten 5 eingreifen. 23 bezeichnet den Anschlußkastendeckel.

Die Befestigung der Laschen 1 und damit des Gehäuses 3 am Anschlußkasten 5 kann lösbar rastend sein. Zu diesem Zweck sind an den Enden 4 der Laschen 1 Rastnocken vorgesehen, die in dieser Figur nicht sichtbar im Bereich der Schlitze 28 mit dem Anschlußkaste verrastet sind. Die Verrastung kann dort im weitesten Sinne als Gelenk ausgebildet sein, wie aus einer der folgenden Figuren näher ersichtlich sein wird. Dieses Gelenk gestattet es, das Gehäuse 3 mit einer Steuerung gegenüber dem Anschlußkasten 5 und damit dem Pumpengehäuse 19 zu verschwenken, um für eventuelle Wartungsarbeiten an der Pumpe 6, die dortige Stirnseite 20 mit der Wartungsschraube 21 frei zu bekommen.

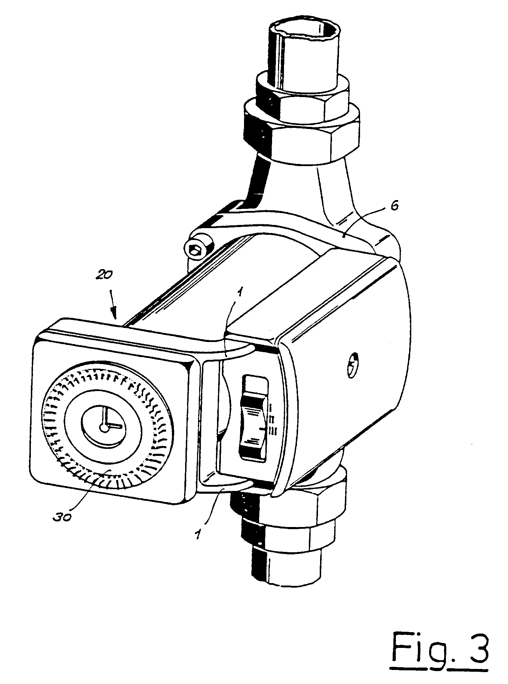

Die Fig. 3 zeigt eine Pumpe 6 mit einem, im Bereich der Stirnseite 20 angeordneten, Gehäuse 3 mit einer dort eingebauten elektromechanisch arbeitenden Schaltuhr 30.

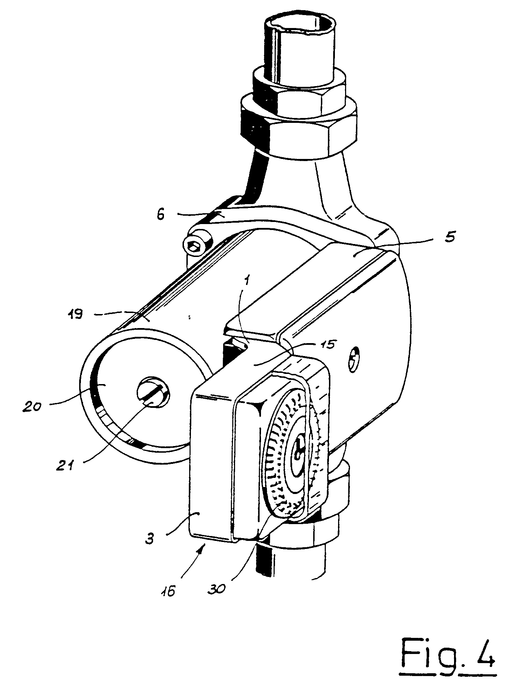

Aus der Fig. 4 ist ersichtlich, wie das Gehäuse 3 mit der Schaltuhr 30, das über die beiden Laschen 1 am Anschlußkasten 5 befestigt ist, gegenüber dem Pumpengehäuse 19 verschwenkt ist, um an die Stirnseite 20 mit der Wartungsschraube 21 zu gelangen.

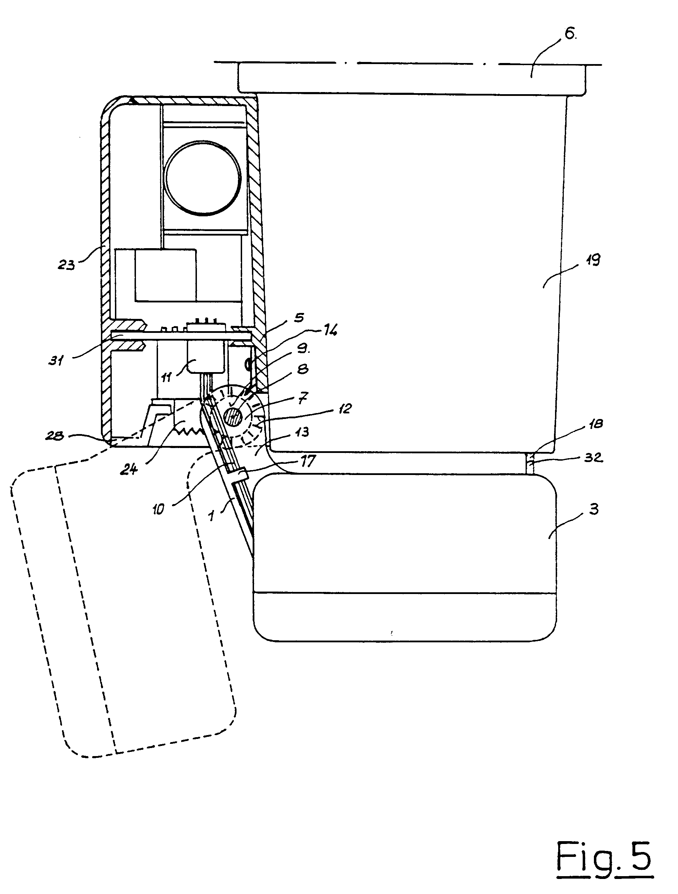

Das Gelenk 7 an der Lasche 1, zum Verschwenken des Gehäuses 3 gegenüber dem Anschlußkasten 5 der Pumpe 6, ist aus der Fig. 5 ersichtlich. Im wesentlichen besteht dieses Gelenk 7 am Ende 4 der Läsche 1 aus einem Scharniergelenk mit einem Lagerzapfen 8, der in ein Lagerloch 9 am Anschlußkasten 5 eingreift. Die Lagerzapfen 8 an den beiden zueinander parallel verlaufenden Laschen 1 sind dort jeweils auf den zueinander benachbarten Innenseiten 13 der Laschen 1 angeordnet, wobei die Lagerlöchen 9 auf den Außenseiten des Anschlußkasten 5 angeordnet sind. Zum leichten Montieren der gelenkartigen Verbindung zwischen den Laschen 1 und dem Anschlußkasten 5 sind die Laschen 1 federelastisch ausgebildet. Auch ist es dort vorgesehen, daß die Laschen 1 unter dem Einfluß eines zusätzlichen Federelementes 14 in einer bevorzugten Lage zum Anschlußkasten 5 gehalten werden können. Zu diesem Zwecke ist auch daran gedacht, daß im Dreh- oder im Schwenkbereich des Gelenkes 7 Raststellungen 12, insbesondere rastende Endstellungen vorgesehen sind.

Diese Raststellungen 12 können insbesondere axial wirkend im Bereich des Gelenks 7 um den Lagerzapfen 8 herum angeordnet sein, sodaß das Gehäuse 3 mit der Steuerung sicher in der jeweiligen Funktions- und/oder Wartungsposition lagenfixiert ist.

Wie aus den Figuren desweiteren ersichtlich ist, sind die Laschen 1 am Gehäuse 3 derart angeordnet, daß sie sowohl mit der oberen Seitenfläche 15 des Gehäuses 3 als auch mit der gegenüberliegenden unteren Gehäuse-Seitenfläche 16 in einer Ebene verlaufend angeordnet sind. Das Gehäuse 3 ist dabei zweckmäßigerweise quadratisch ausgebildet. Anstelle einer quadratischen Form des Gehäuses 3 kann natürlich auch jede andere Gehäuseformgebung eingesetzt werden, wenn dies von Vorteil sein sollte. Auch kann nur eine Lasche 1 das Gehäuse 3 mit dem Anschlußkasten 5 verbinden. Die Laschen 1 sind zweckmäßigerweise einstückig mit dem Gehäuse 3 verbunden. Der Querschnitt der Lasche 1 kann rechteckig, U-förmig oder L-förmig ausgebildet sein.

Zwischen dem Gehäuse 3 und dem Anschlußkasten 5 verläuft ein elektrisches Steuer- und Versorgungskabel 10, das auf der Seite des Anschlußkastens 5 mit einer elektrischen Steckverbindung 11 insbesondere auf einer Leiterplatte 31 angeschlossen ist. Das -Kabel 10 verläuft zweckmäßigerweise im Bereich einer Lasche 1 verdeckt angeordnet. Das -Kabel 10 kann auch teilweise von einer Lasche 1 ummantelt sein, wenn diese beispielsweise einen U-förmigen Querschnitt besitzt. Auch ist es daran gedacht, daß der elektrische Anschluß auf der Seite des Anschlußkastens 5 zwischen dem -Kabel 10 und dem Anschlußkasten 5 im Bereich des Gelenkes 7 angeodnet ist. Die elektrische Verbindung kann in diesem Falle durch das Aufrasten und Befestigen der Lasche 1 auf dem Anschlußkasten 5 selbsttätig bewirkt werden.

Im Bereich des Gelenkes 7 können erforderlichenfalls auch ein elektrischer Schalter 18 und/oder in stufen- oder kontinuierlich beim Verschwenken des Gehäuses 3 gegenüber der Pumpe 6 bzw. dem Anschlußkasten 5 verstellt betätigte Regler angeordnet sein. Ein entsprechender Schalter 18 in der Ausführung und Funktion eines Endschalters kann auch in einem anderen Bereich am Anschlußkasten 5 angeordnet sein, der dort in einer bestimmten Endlage des Gehäuses 3 durch einen Nocken 32 am Gehäuse 3 betätigt wird. Schalter 18 und Nocken 32 können auch seitenverkehrt d.h. der Schalter 18 kann am Gehäuse 3 angeordnet sein.

Das Gehäuse 3 und der Anschlußkasten 5 können eine feste, nichtlösbare zusammenhängende Baueinheit bilden. Dadurch ist es möglich, eine Steuerung in einem Gehäuse 3 auch nachträglich noch an eine Pumpe 6 zu installieren, indem in diesem Falle einfach der Anschlußkasten 5 gegen eine Baueinheit Anschlußkasten 5 mit Gehäuse 3 ausgetauscht wird. Sofern eine lösbare Verbindung zwischen dem Gehäuse 3 und einem Anschlußkasten 5 besteht, ist es vorgesehen, daß zwischen dem Gehäuse 3 und dem Anschlußkasten 5 eine insbesondere mechanisch wirkende Kennung vorgesehen ist, installationsbedingte Verwechslungen zwischen Gehäuse 3 und Anschlußkasten 5 auszuschließen.

Es ist außerdem vorgesehen, daß das Gehäuse 3, wenn es zum Anschlußkasten hin verschwenkt ist, mit mindestens einer seiner Gehäuseseiten formschlüssig an einer der Außenseiten des Anschlußkastens 5 anliegt.

In Abänderung der gezeigten und beschriebenen Befestigungsmöglichkeiten des Gehäuses 3 mit den Laschen 1 am Anschlußkasten 5 ist es auch möglich, daß die Befestigung der Laschen 1 am Anschlußkasten 5 ausschließlich mittels des Kastendeckels 23 erfolgen kann. Der Kastendeckel 23 kann dabei die Laschen 1 in entsprechenden Schlitzen 28 feststellen oder aber die Laschen 1 bzw. die vorgesehenen Gelenke 7 sind am Kastendeckel 23 befestigt, der dann zusammen mit dem Gehäuse 3 eine Baueinheit bilden kann.

Desweiteren ist daran gedacht, daß das Gelenk 7 oder ein weiteres Gelenk 7 zwischen dem Gehäuse 3 und den Laschen wirksam ist. Durch mehr als ein Gelenk 7 im Bereich der Befestigungsvorrichtung zwischen dem Gehäuse 3 und dem Anschlußkasten 5 ist im Gegensatz zu einer Verschwenkung eine Paralellverschiebung des Gehäuses 3 möglich. Anstelle eines scharnierartigen Drehgelenkes 7 kann auch ein anderes Gelenksystem beispielsweise ein Kugelgelenk vorgesehen sein.

## Patentansprüche

1. Gerät mit elektrischem Anschlußkasten (5) für eine Heizungsanlage, wie Pumpe (6) oder Ventil, mit einem Gehäuse (3) für elektrische und/oder elektronische Steuerungen, das mit dem elektrischen Anschlußkasten (5) durch eine Befestigungseinrichtung verbunden ist, **dadurch gekennzeichnet**, daß die Befestigungseinrichtung aus mindestens einer profilstabförmigen Lasche (1) gebildet ist, die mit dem einen Ende (4) am Gehäuse (3) und mit dem anderen Ende (4) am elektrischen Anschlußkasten (5) befestigt, und mit mindestens einem Gelenk (7) versehen ist.

2. Gerät nach Anspruch 1, dadurch gekennzeichnet, daß das Gelenk (7), insbesondere ein Scharnier- oder Kugelgelenk, auf der Seite des Gehäuses (3) und/oder auf der Seite des Anschlußkastens (5) angeordnet ist.

3. Gerät nach Anspruch 2, dadurch gekennzeichnet, daß das Gelenk (7) feststellbar und/oder plombierbar ist.

4. Gerät nach Anspruch 1 bis 3, dadurch gekennzeichnet, daß im Dreh- oder Schwenkbereich des Gelenks (7) Raststellungen (12), insbesondere rastende Endstellungen, vorgesehen sind.

5. Gerät nach Anspruch 1 bis 4, dadurch gekennzeichnet, daß zwei Laschen (1) parallel zueinander verlaufend angeordnet sind.

6. Gerät nach Anspruch 5, dadurch gekennzeichnet, daß an dem, dem Anschlußkasten (5) benachbarten, Ende (4) der Laschen (1), an jeder Lasche (1), ein Lagerzapfen (8) angeordnet ist, daß die Lagerzapfen (8) auf den zueinander benachbarten Innenseiten (13) einander gegenüberliegend angeordnet sind, und daß die Lagerzapfen (8) in Lagerlöcher (9) auf der Außenseite des Anschlußkastens (5) eingreifen.

7. Gerät nach Anspruch 1 bis 6, dadurch gekennzeichnet, daß die Lasche (1) federelastisch ausgebildet ist.

8. Gerät nach Anspruch 1 bis 7, dadurch gekennzeichnet, daß die Lasche (1) unter dem Einfluß eines Federelementes (14) in einer bevorzugten Stellung zum Anschlußkasten (5) und/oder zum Gehäuse (3) gehalten wird.

9. Gerät nach Anspruch 1 bis 8, dadurch gekennzeichnet, daß die Laschen (1) an einem quadratisch ausgebildeten Gehäuse (3) angeordnet sind, und daß die Laschen (1) einerseits mit der oberen Gehäuseseitenfläche (15) und andererseits mit der unteren Seitenfläche (16) in einer Ebene verlaufend angeordnet sind.

10. Gerät nach Anspruch 1 bis 9, dadurch gekennzeichnet, daß zwischen dem Gehäuse (3) und dem Anschlußkasten (5) ein Steuer- und Versorgungskabel (10) verlaufend angeordnet ist.

11. Gerät nach Anspruch 10, dadurch gekennzeichnet, daß das Kabel (10) innerhalb einer Lasche (1) verlaufend angeordnet ist.

12. Gerät nach Anspruch 11, dadurch gekennzeichnet, daß auf der Innenseite (13) der Lasche (1) insbesondere rastende Befestigungsmittel (17) zur Befestigung des Kabels (10) vorgesehen sind.

13. Gerät nach Anspruch 10 bis 12, dadurch gekennzeichnet, daß am Anschlußkasten (5) eine elektrische Steckverbindung (11) für das Kabel (10) vorgesehen ist.

14. Gerät nach Anspruch 10 bis 13, dadurch gekennzeichnet, daß die elektrische Verbindung zwischen dem Kabel (10) und dem Anschlußkasten (5) im Bereich des Gelenks (7), am Ende (4) der Lasche (1), angeordnet ist.

15. Gerät nach Anspruch 10 bis 14, dadurch gekennzeichnet, daß durch das Aufrasten und Befestigen einer Lasche (1) auf dem Anschlußkasten (5) die elektrische Verbindung zwischen dem Gehäuse (3) und dem Anschlußkasten (5) selbsttätig bewirktbar ist.

16. Gerät nach Anspruch 1 bis 15, dadurch gekennzeichnet, daß durch die Verschwenkung und/oder Befestigung des Gehäuses (3) zum Anschlußkasten (5) ein Schalter (18) und/oder ein in Stufen verstellbarer elektrischer Regler betätigbar ist.

17. Gerät nach Anspruch 1 bis 16, dadurch gekennzeichnet, daß zwischen der Lasche (1) und dem Anschlußkasten (5) eine mechanisch wirkende Kennung eines bestimmten Gehäuses (3) zu einem bestimmten Anschlußkasten (5) vorgesehen ist.

18. Gerät nach Anspruch 1 bis 17, dadurch gekennzeichnet, daß die rastende Befestigung zwischen der Lasche (1) und dem Anschlußkasten (5) einerseits und der Lasche (1) und dem Gehäuse (3) andererseits nichtlösbar ist.

19. Gerät nach Anspruch 1 bis 18, dadurch gekennzeichnet, daß das Gehäuse (3), die Lasche (1) und der Anschlußkasten (5) eine zusammenhängende Baueinheit bilden.

20. Gerät nach Anspruch 1 bis 19, dadurch gekennzeichnet, daß das zum Anschlußkasten (5) hin verschwenkbare Gehäuse (3) mit mindestens einer seiner Gehäuseseiten, an mindestens einer der Außenseiten des Anschlußkastens (5) formschlüssig anliegt.

## Claims

1. A device comprising an electric terminal box (5) for a heating apparatus, such as a pump (6) or valve, with a housing (3) for electric and/or electronic control units which is connected to the electric terminal box (5) by a fixing device, characterised in that the fixing device is formed by at least one connecting arm (1) in the form of a profiled bar which is attached at one end (4) to the housing (3) and at the other end (4) to the electric terminal box (5) and is provided with at least one joint (7).

2. A device as claimed in Claim 1, characterised in that the joint (7), in particular a hinge- or ball and socket joint, is arranged on the side of the housing (3) and/or on the side of the terminal box (5).

3. A device as claimed in Claim 2, characterised in that the joint (7) can be immobilized and/or lead-sealed.

4. A device as claimed in Claim 1 to 3, characterised in that stop locations (12), in particular locking end locations, are provided in the rotating or swivelling range of the joint (7).

5. A device as claimed in Claim 1 to 4, characterised in that two connecting arms (1) are arranged so as to extend in parallel to one another.

6. A device as claimed in Claim 5, characterised in that at that end (4) of the connecting arms (1) adjacent to the terminal box (5), a bearing pin (8) is arranged on each connecting arm (1), that the bearing pins (8) are arranged opposite one another on the mutually adjacent inner sides (13), and that the bearing pins (8) engage into bearing apertures (9) on the outside of the terminal box (5).

7. A device as claimed in Claim 1 to 6, characterised in that the connecting arm (1) is designed to be resilient.

8. A device as claimed in Claim 1 to 7, characterised in that the connecting arm (1) is retained in a preferred position relative to the terminal box (5) and/or the housing (3) under the influence of a spring element (14).

9. A device as claimed in Claim 1 to 8, characterised in that the connecting arms (1) are arranged on a housing (3) of square formation, and that the connecting arms (1) are arranged so as to extend in one plane on the one hand with the upper housing side surface (15) and on the other hand with the lower side surface (16).

10. A device as claimed in Claim 1 to 9, characterised in that a control- and supply cable (10) is arranged so as to extend between the housing (3) and the terminal box (5).

11. A device as claimed in Claim 10, characterised in that the cable (10) is arranged so as to extend inside the connecting arm (1).

12. A device as claimed in Claim 11, characterised in that in particular locking fixing means (17) for the fixing of the cable (10) are provided on the inside (13) of the connecting arm (1).

13. A device as claimed in Claim 10 to 12, characterised in that an electric plug connection (11) for the cable (10) is provided on the terminal box (5).

14. A device as claimed in Claim 10 to 13, characterised in that the electric connection between the cable (10) and the terminal box (5) is arranged in the region of the joint (7) at the end of the connecting arm (1).

15. A device as claimed in Claim 10 to 14, characterised in that the electric connection between the housing (3) and the terminal box (5) can be automatically established by the locking and fixing of a connecting arm (1) onto the terminal box (5).

16. A device as claimed in Claim 1 to 15, characterised in that a switch (18) and/or a step-adjustable electric control device can be actuated by swivelling and/or fixing the housing (3) in relation to the terminal box (5).

17. A device as claimed in Claim 1 to 16, characterised in that a mechanically operating coding of a specific housing (3) in relation to a specific terminal box (5) is provided between the connecting arm (1) and the terminal box (5).

18. A device as claimed in Claim 1 to 17, characterised in that the locking attachment between the connecting arm (1) and the terminal box (5) on the one hand and the connecting arm (1) and the housing (3) on the other hand is non-releasable.

19. A device as claimed in Claim 1 to 18, characterised in that the housing (3), the connecting arm (1) and the terminal box (5) form a continuous unit.

20. A device as claimed in Claim 1 to 19, characterised in that with at least one of its housing sides the housing (3), which can be swivelled towards the terminal box (5), bears interlockingly against at least one of the outer sides of the terminal box (5).

## Revendications

1. Dispositif notamment pompe (6) ou valve avec boîte de connexion électrique (5) pour des installations de chauffage, comprenant un boîtier (3) pour les commandes électriques et/ou électroniques relié à la boîte de connexion électrique (5) par un dispositif de fixation, caractérisé en ce que le dispositif de fixation est constitué d'au moins une languette (1) ayant la forme d'une tige profilée, une extrémité (4) de cette languette étant fixée sur le boîtier (3) et l'autre extrémité (4) sur la boîte de connexion électrique (5), la languette étant munie d'au moins une articulation (7).

2. Dispositif selon la revendication 1, caractérisé en ce que l'articulation (7), plus particulièrement une articulation à charnière ou à rotule, est disposée sur le côté du boîtier (3) et/ou de la boîte de connexion (5).

3. Dispositif selon la revendication 2, caractérisé en ce que l'articulation (7) peut être bloquée et/ou plombée.

4. Dispositif selon l'une quelconque des revendications 1 à 3, caractérisé en ce que des positions d'encliquetage (12), plus particulièrement des positions finales sont prévues dans la plage de rotation ou de pivotement de l'articulation (7).

5. Dispositif selon l'une quelconque des revendications 1 à 4, caractérisé en ce que deux languettes (1) sont disposées parallèlement l'une par rapport à l'autre.

6. Dispositif selon la revendication 5, caractérisé en ce qu'un pivot (8) est disposé à l'extrémité (4) de la languette (1) à côté de la boîte de connexion (5), en ce que les pivots (8) sont disposés les uns en face des autres sur les faces intérieures (13) adjacentes et que les pivots (8) sont introduits dans des trous (9) sur la face extérieure de la boîte de connexion (5).

7. Dispositif selon l'une quelconque des revendications 1 à 6, caractérisé en ce que la languette (1) est élastique.

8. Dispositif selon l'une quelconque des revendications 1 à 7, caractérisé en ce que la languette est maintenue, sous l'effet d'un élément de ressort (14), dans une position préférentielle par rapport à la boîte de connexion (5) et/ou par rapport au boîtier (3).

9. Dispositif selon l'une quelconque des revendications 1 à 8, caractérisé en ce que les languettes (1) sont disposées sur un boîtier (3) de forme carrée et que les languettes (1) sont disposées sur un même plan avec la surface latérale supérieure du boîtier (15) d'une part, et avec la surface latérale inférieure (16), d'autre part.

10. Dispositif selon l'une quelconque des revendications 1 à 9, caractérisé en ce qu'un câble de commande et d'alimentation (10) est disposé entre le boitier (3) et la boîte de connexion (5).

11. Dispositif selon la revendication 10, caractérisé en ce que le câble (10) est disposé à l'intérieur d'une languette (1).

12. Dispositif selon la revendication 11, caractérisé en ce que des moyens de fixation, de préférence du type à encliquetage, sont disposés sur la face intérieure (13) de la languette (1) pour fixer le câble (10).

13. Dispositif selon l'une quelconque des revendications 10 à 12, caractérisé en ce qu'une liaison électrique enfichable (11) est prévue sur la boîte de connexion (5) pour le câble (10).

14. Dispositif selon l'une quelconque des revendications 10 à 13, caractérisé en ce que la liaison électrique entre le câble (10) et la boîte de connexion (5) est disposée dans la plage de l'articulation (6), à l'extrémité (4) de la languette (1).

15. Dispositif selon l'une quelconque des revendications 10 à 14, caractérisé en ce que la liaison électrique entre le boitier (3) et la boîte de connexion (5) est établie automatiquement par encliquetage et fixation d'une languette (1) sur la boîte de connexion (5).

16. Dispositif selon l'une quelconque des revendications 1 à 15, caractérisé en ce que le pivotement et/ou la fixation du boîtier (3) par rapport à la boîte de connexion (5) permettent d'actionner un commutateur (18) et/ou un régulateur électrique réglable par échelons.

17. Dispositif selon l'une quelconque des revendications 1 à 16, caractérisé en ce qu'une identification à effet mécanique d'un boîtier (3) donné par rapport à une boîte de connexion (5) donnée est prévue entre la languette (1) et la boîte de connexion (5).

18. Dispositif selon l'une quelconque des revendications 1 à 17, caractérisé en ce que la fixation à encliquetage prévue entre la languette (1) et la boîte de connexion (5) d'une part, et entre la languette (1) et le boîtier (3), d'autre part, ne peut être démontée.

19. Dispositif selon l'une quelconque des revendications 1 à 18, caractérisé en ce que le boîtier (3), la languette (1) et la boîte de connexion (5) constituent un ensemble cohérent.

20. Dispositif selon l'une quelconque des revendications 1 à 19, caractérisé en ce que le boîtier (3) pouvant être pivoté en direction de la boîte de connexion (5) est relié avec au moins l'une des faces extérieure de la boîte de connexion (5) avec au moins l'une des faces du boîtier.
